# EUROPEAN PATENT APPLICATION

(11) **EP 4 801 188 A2**
(43) Date of publication of application: **02.09.2026**
(21) Application number: 26161482.0
(22) Date of filing: 27.02.2026
(51) Int. Cl.: H05B 3/00, B29C 61/02

(54) **INFRARED HEATING DEVICE, HEATING DEVICE REFLECTOR ASSEMBLY, AND HEATING DEVICE CONTROL SYSTEM**

(30) Priority: 28.02.2025 CN 202510241444; 25.03.2025 US 202519089807
(71) Applicant: TE Connectivity Solutions GmbH, 8200 Schaffhausen (CH); Tyco Electronics (Shanghai) Co., Ltd., Pilot Free Trade Zone Shanghai 200131 (CN)
(72) Inventor: BORISUK, Peter John, BERWYN, 19312 (US); BAO, Tianyu (Bowen), SHANGHAI, 200233 (CN); WANG, Zhen, SHANGHAI, 200233 (CN); YANG, Mirco, SHANGHAI, 200233 (CN)
(74) Representative: Ashton, Gareth Mark

(57) **Abstract**

A heating device (100) is provided. The device (100) includes a heat generating lamp (150) and a reflector assembly (200). The reflector assembly (200) includes an upper reflector (202), a lower reflector (204), a pair of side reflectors (206,208) arranged on either side of the upper and lower reflectors, and a lamp reflector (210). A temperature sensor (180) is also provided. A control system (300) is responsive to the output of the temperature sensor (180) for controlling at least one parameter of the heat generating lamp (150).

## Description

This application claims the benefit of Chinese Patent Application No. CN 202510241444.2 filed on February 28, 2025 and United States Patent Application No. 19/089,807 filed on 25 March 2025, the whole disclosures of which are incorporated herein by reference.

The present disclosure relates to an infrared heat gun, and more particularly, to a reflector and control system for a heat gun.

In the prior art, infrared (IR) heating devices currently utilize halogen lamps as their primary heat source. While this technology has been widely used, it presents several challenges that may impact performance and user experience. For example, current designs lack precise control over heat output, potentially leading to inconsistent heating (e.g., heat shrink tubing). This can result in unintended overheating of products, causing solder to flow excessively. Halogen lamps are also subject to a phenomenon known as luminous depreciation. Over time, these lamps experience a gradual but noticeable decline in light output, which can affect the consistency and efficiency of the heating process. The operational lifespan of halogen lamps is also relatively short compared to other heating technologies, necessitating more frequent replacements and potentially increasing maintenance costs.

In one embodiment of the present disclosure, a heating device is provided. The device includes a heat generating lamp and a reflector assembly. The reflector assembly includes an upper reflector, a lower reflector, a pair of side reflectors arranged on either side of the upper and lower reflectors, and a lamp reflector. A temperature sensor (e.g., an IR camera) is also provided. A control system is responsive to the output of the temperature sensor for controlling at least one parameter of the heat generating lamp.

In another embodiment, an infrared heating device for a tubular product comprises a housing; a heat generating lamp; and a reflector assembly. The reflector assembly includes: a curved upper reflector having a convex side; a curved lower reflector having a convex side opposing the convex side of the curved upper reflector; a pair of side reflectors arranged on either side of the upper and lower reflectors; and a lamp reflector. The reflector assembly may define an opening adapted to receive a tubular shaped product. The upper and lower reflectors may have a tapered width along their length, for example the pair of side reflectors may be oriented obliquely to each other, with a distance between the side reflectors increasing along a direction away from the heat generating lamp.

In another embodiment, a method of operating an infrared heating device for a tubular product comprises: setting a desired maximum temperature of the tubular product; setting a desired temperature rise gradient of the tubular product; setting a desired power supplied to a lamp of the device; measuring a real time temperature of the tubular product with a temperature sensor; after the measured temperature of the tubular product reaches the desired maximum temperature, lowering the power supplied to the lamp; prompting a user to rotate the tubular product within the device; and repeating the process until desired heating of the tubular product is achieved.

The invention will now be described by way of example with reference to the accompanying Figures, of which:
Figure 1 is side perspective view of an IR heat gun including a reflector assembly according to an embodiment of the present disclosure wherein a side of a housing of the gun has been removed for clarity;
Figure 2 is a side view of the heat gun of Figure 1;
Figure 3 is a side perspective view of the reflector assembly and a lamp of the heat gun of the preceding figures;
Figure 4 is another side perspective view of the reflector and lamp of Figure 3 wherein a side reflector of the reflector assembly has been removed;
Figure 5 is a perspective view of the heat gun and control system useful for describing embodiments of the present disclosure;
Figure 6 is a diagram of a heat gun and control system according to an embodiment of the present disclosure;
Figure 7 is a diagram illustrating the operation of the system of Figure 6;
Figure 8 is an illustration of an exemplary control screen during operation of the heat gun and control system according to embodiments of the present disclosure; and
Figure 9 is a process diagram illustrating a method of controlling a heat gun according to embodiments of the present disclosure.

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

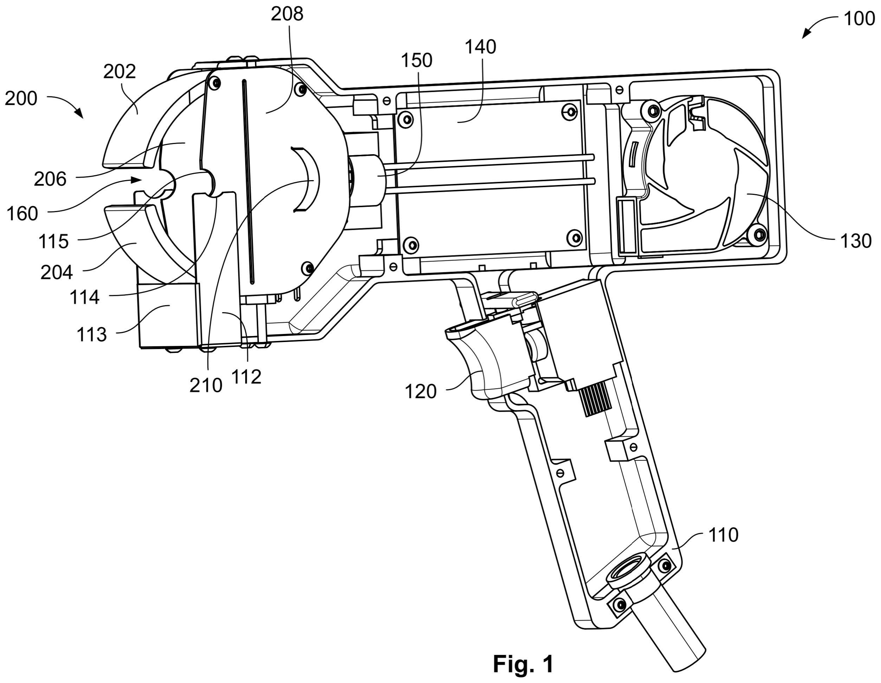

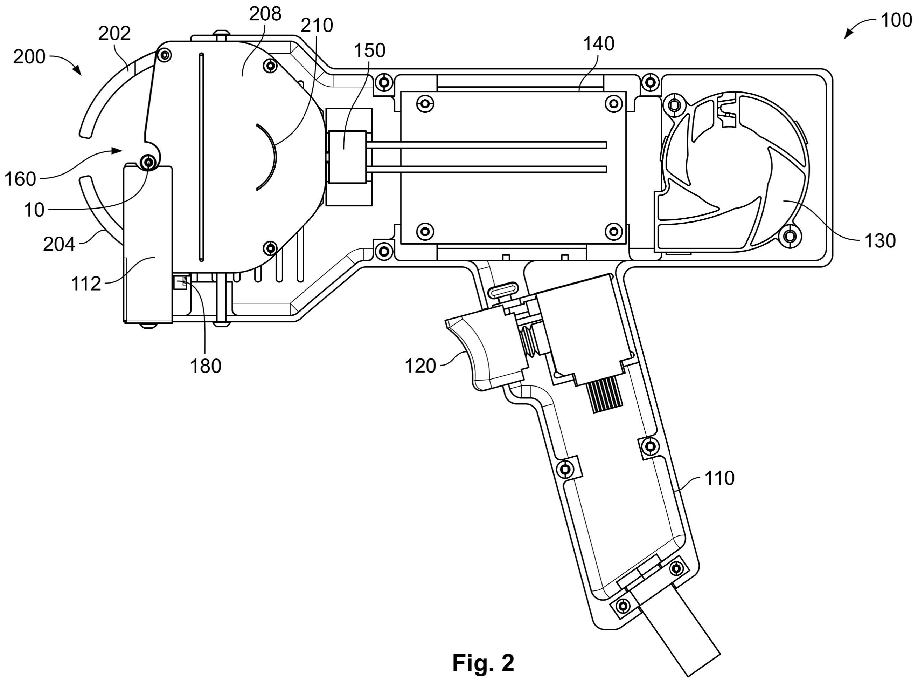

Referring generally to Figures 1 and 2, a simplified illustration of an IR heating device 100 including a reflector or reflector assembly 200 according to an embodiment of the present disclosure is provided. The device 100 includes a housing 110, an outer side of which has been removed for clarity. The housing 110 contains a fan 130, a printed circuit board (PCB) 140, a heat source or lamp 150 (e.g., a halogen lamp) of generating, for example, IR radiation, an IR camera or heat detecting or temperature sensor 180 (see Figure 2), and at least a portion of the reflector assembly 200. A trigger or trigger assembly 120 is also at least partially arranged within the housing and is operative to control the operation of the lamp 150, as will be set forth in greater detail herein.

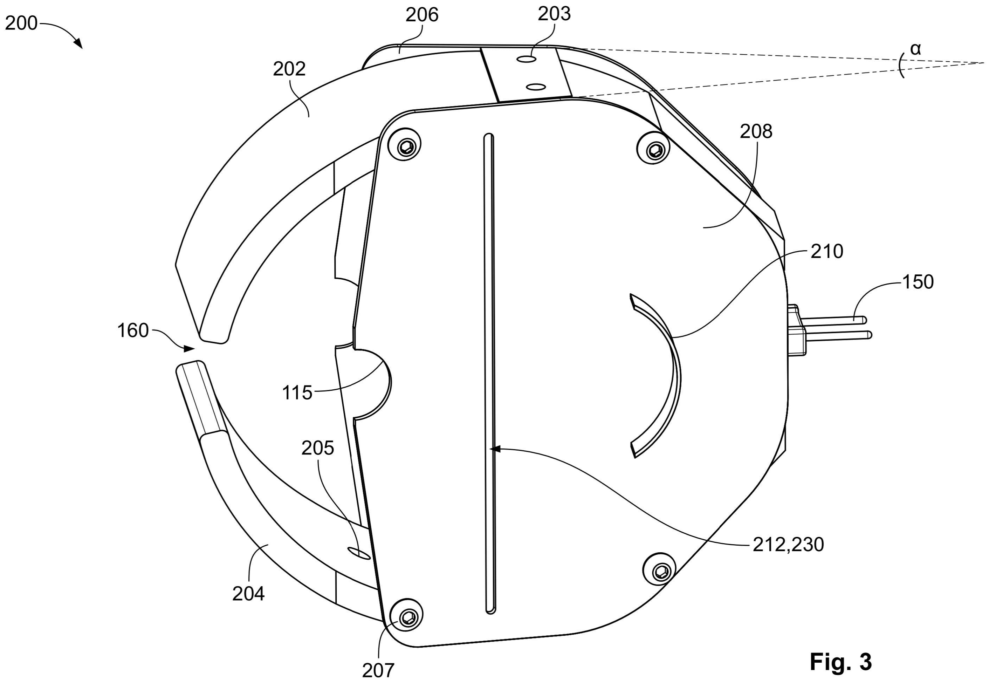

The reflector assembly 200 includes a top or upper, curved upper reflector or mirror 202, a bottom, or lower curved reflector or mirror 204, a pair of opposing side reflectors or mirrors 206, 208, and an inner or lamp mirror or lamp reflector 210. The reflector assembly 200, and in particular the top and bottom mirrors 202, 204 define a product or tube opening 160 sized to receive, for example, a cable assembly fitted with heat shrinkable tubing (e.g., tubing or product 10, as shown in Figure 2). The side mirrors 206, 208 include semi-circular cutouts or recesses 115 defined therein which are axial aligned with corresponding semi-circular or arcuate notches or recesses 114 formed on a pair of vertical supports 112 of the housing 110. The recesses 114, 115 are aligned in an axial direction of the tubing or product 10 so as to support the tubing or product 10 radially within the device 100 after insertion via the tube receiving opening 160. A front support 113 of the housing 110 is adapted to support the bottom mirror 204 via mechanical attachment, as set forth in greater detail herein. While the top mirror 202 may be fastened to the housing 110 via the illustrated apertures 203 shown in Figure 3.

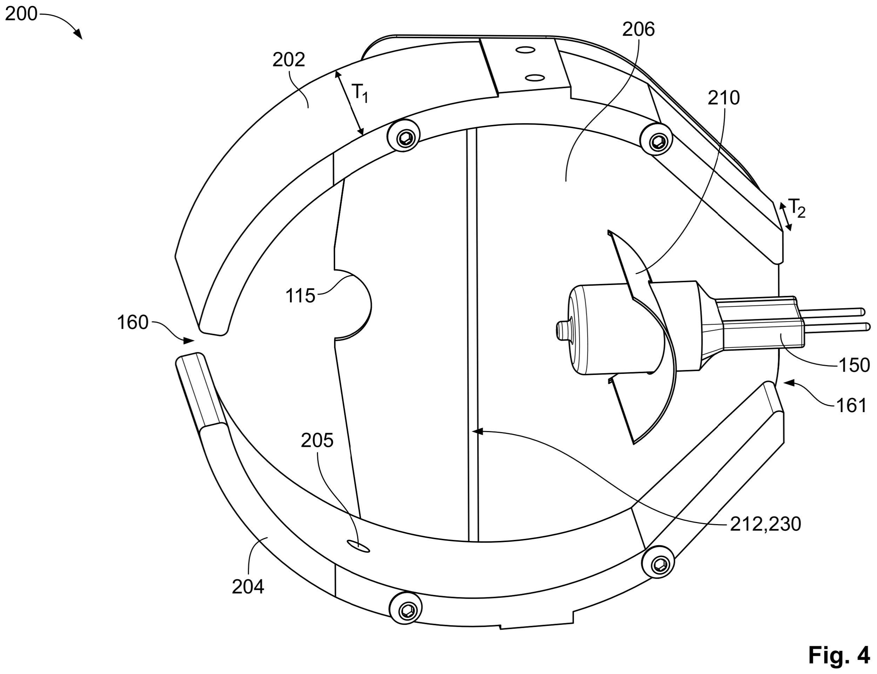

With reference to Figures 3 and 4, the reflector assembly 200 is shown in greater detail. As illustrated, the side mirrors 206, 208 may be attached to the top and bottom mirrors 202, 204 via shared fasteners 207. The fasteners 207 extend through the top mirror 202 (and/or the bottom mirrors 204) and each of the side mirrors 206, 208 in the axial direction of the tubing or product 10. In this way, each of the top and bottom mirrors 102, 204 are clamped between the side mirrors 206, 208 in the axial direction.

As shown most clearly in Figure 4, wherein the side mirror 208 has been removed for clarity, each of the top and bottom mirrors 202, 204 comprises arcuate or semi-circular profiles having concave sides opposing one another. Corresponding ends of the top and bottom mirrors 202, 204 define the tube receiving opening 160, and a second opening 161 adapted to receive the lamp 150 therethrough. The top and bottom mirrors 202, 204 are designed with specific curvatures to optimize heat reflection and distribution within the reflector.

The lamp 150 extends generally through the lamp mirror or reflector 210, or the reflector 210 generally surrounds the lamp 150. In one embodiment, the lamp reflector 210 is generally curved, being convex in a direction facing the tube receiving opening 160, and more particularly, having a radius of curvature defined about an axis parallel to the axial direction of the tubing or product 10 and/or the tube opening defined by the recesses 114, 115. In another embodiment, as illustrated, the lamp reflector 210 is elliptical in shape, and more specifically, includes one focus located at the filament of the lamp 150, and another focus at a central axis of the cable and/or tubing or product 10. In this way, the reflector or mirror assembly 200 provides an overall reflective surface which surrounds a majority of the tubing or product 10 in its radial direction, with the exception of the area associated with the tube receiving opening 160. Similarly, the side mirrors 206, 208 reduce the amount of radiation and/or heat which would otherwise be lost in a generally axial direction of the tubing or product 10.

Further, as shown in Figure 4, a thickness T₁ of each of the top and bottom mirrors 202, 204 proximate first ends thereof may be greater than their thicknesses T₂ proximate second ends thereof proximate the lamp 150. In this way, with the side mirrors 206, 208 abuttingly mounted thereto, the side mirrors are angled relative to one another, for example, by an angle α as shown in Figure 3. The inclusion of angled side mirrors 206, 208 may help to direct heat more effectively towards the target area or the tubing or product 10. In other embodiments, the thicknesses T₁ and T₂ may be equal, and thus the angle α between the side mirrors 206, 208 may be zero or approximately zero, making the side mirrors 206, 208 parallel or generally parallel to one another. Each of the side mirrors 206, 208 may further include a slotted opening 212 formed therethrough for accepting a plate of filtered glass 230 to protect a user's eyes. The glass 230 is adapted to block most visible light, while allowing IR energy to pass therethrough. As further shown in Figure 4, the bottom mirror 204 defines a mounting opening 205 for receiving, for example, a fastener for securing the bottom mirror to the support 113, as shown in Figure 1.

The above-described advanced design of an infrared heat gun reflector, incorporating various curved mirrors and precise placement, significantly contributes to improved heat distribution, energy efficiency, and processing time for tubing applications. This design addresses several key aspects of heat transfer and distribution, resulting in a more effective and efficient shrinking process. The reflector assembly has specified curvature and placements of mirrors and lamp. It can distribute heat on all surfaces of tubing. This solution greatly improves current IR heat guns of the prior art. Heat shrink quality is consistent with much less operator dependent, as well as energy saving for sustainability. With the optimized reflector, heat can be distributed evenly on the tube. Saving the need of operators manually turning the tube a significant amount or degree during heating, if not entirely.

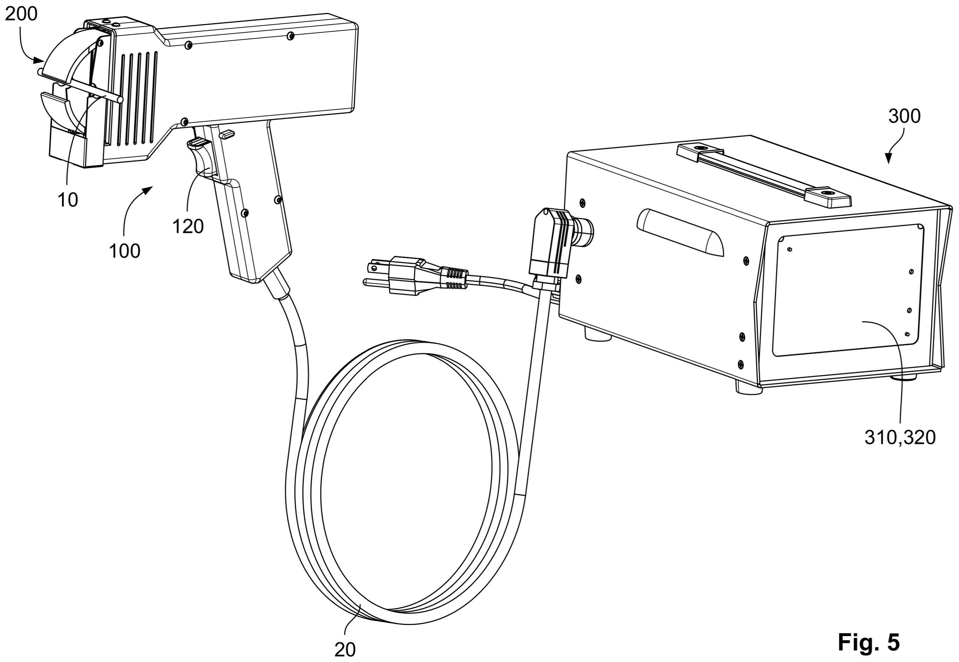

Figure 5 is a perspective view of the heat gun and control system useful for describing embodiments of the present disclosure. As shown, the system includes a power supply and controller 300. The controller 300 includes an interface, such as touch screen. The screen 310, 320 may serve as an input device for controlling the unit and visualizing various parameters as set forth in detail herein.

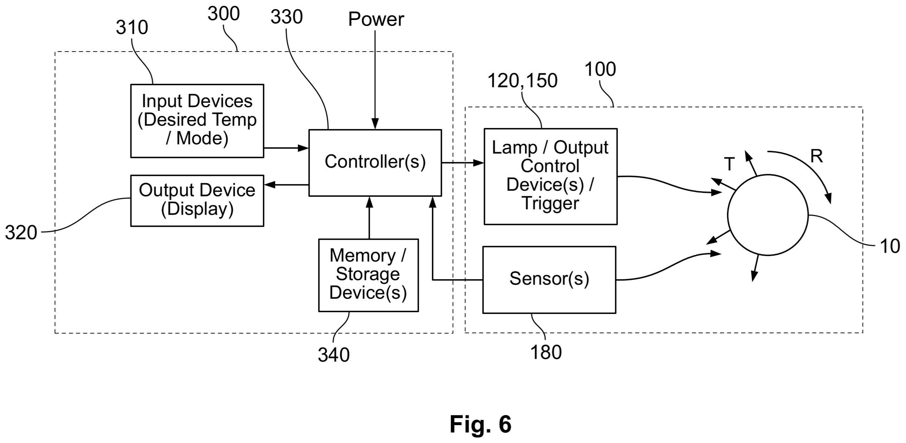

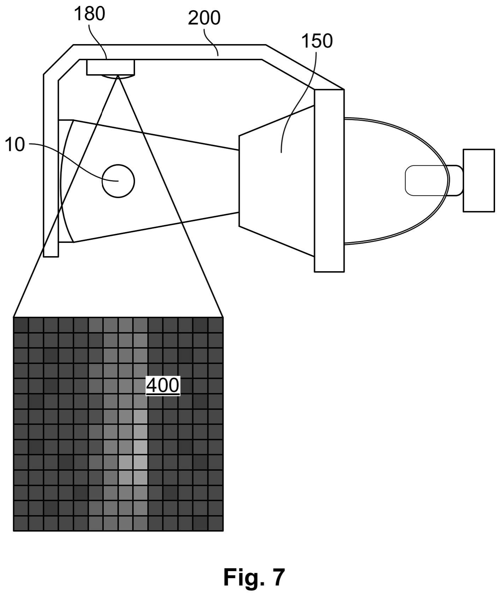

With reference now to Figure 6, a simplified block diagram of the controller 300 and heating device 100 is shown. In addition to the touchscreen 310, 320, a microprocessor or controller 330 is provided and is operative with instructions stored in one or more memory device 340 for performing the control operations described therein. More specifically, the heating device 100 includes a temperature sensor or IR camera monitoring the temperature of the tubing or product 10. The temperature sensor 180 provides feedback to the controller 330. This feedback may be used to alter the output of the lamp 150 or provide a visual indication to the user to rotate the product 10 when a desired predetermined temperature T is achieved, indicated by the character R in Figure 6. As exemplary temperature gradient as measured by the temperature sensor 180 is illustrated in Figure 7. In this way, even heating of the tubing or product 10 can be realized.

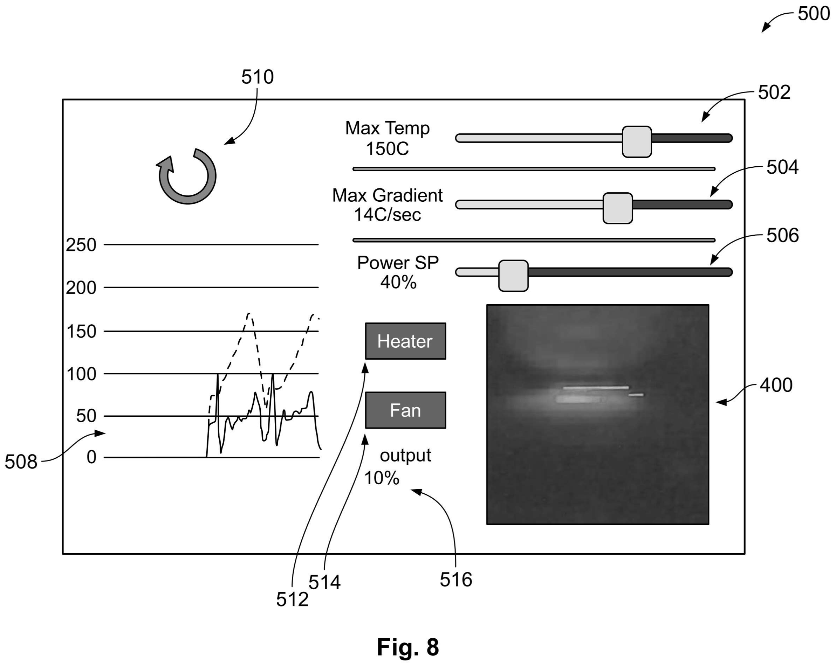

Figure 8 is an illustration of an exemplary control screen (e.g., 310, 320) during operation of the heat gun and control system according to embodiments of the present disclosure. With heater enabled, power is set by adjusting a power control or slider 506. Once the IR camera detects the tubing or product 10 heating, control is switched to limit temperature rise rate. This is set using a max gradient slider or control 504. Temperature increases until the product reaches a high limit, set with set with a max temperature slider 502. Power is then cut or otherwise limited to the lamp and a turn product indicator 510 is shown to a user (if necessary). As product is turned by a user, measured temperature drops, and cycle is repeated as shown in a temperature process history graph 508. Other features include an IR output display 516, heater and fan controls 512, 514, as well a visual indicator of the output of the IR second.

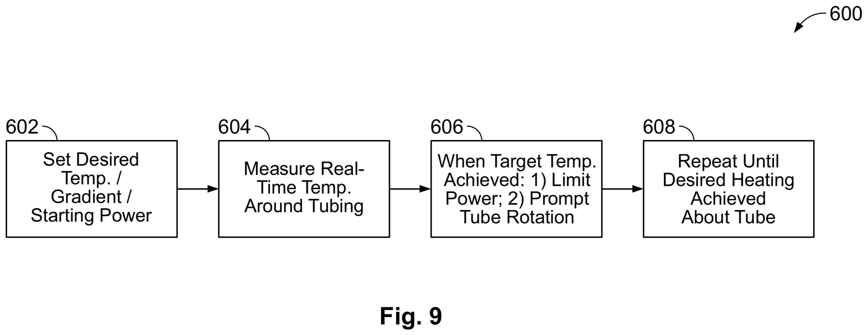

Figure 9 is a process diagram illustrating a simplified method 600 of controlling a heat gun according to embodiments of the present disclosure. In a first step 602, a user sets a desired maximum temperature, temperature gradient and starting power. Using the IR sensor, real time temperature is measured in a step 604. In a step 606, upon reaching the desired temperature, power is limited, and the user may be prompted to rotate the product. The process is repeated in a step 608 until desired heating is uniformly achieved over the product.

Embodiments of the present disclosure provides several advantages over the prior art.

Using an IR camera for real-time detection of the product's temperature is an efficient and accurate means to close the control loop. Measuring the product allows control of heat-up rate and maximum temperature. Frontside and backside product temperature can be measured at same time.

The solution, however, is not limited to IR heating tools. It can also be implemented in heat guns with other heat sources. The design targets energy for faster processing while using a smaller lamp. Lower power means faster cool down time too. The 'variable speed' trigger (i.e., trigger 120) can operate in multiple automatic and manual modes. Closed loop control systems can significantly improve temperature regulation in infrared heat guns. A thermal sensor placed close to the heat source (in this case, it would be near tubing that is being heated) can provide real-time temperature feedback to a microcontroller.

Using an IR camera to detect heat on the tubing provides real-time temperature feedback on the temperature of the tubing or the product being heated.

The power output of the infrared lamp can be adjusted based on the feedback from the thermal sensor. When overheating is detected, the system can automatically decrease the power (heating source) to allow for thermal dissipation. This dynamic adjustment ensures that the desired temperature is maintained consistently, which is crucial for heat shrink applications.

Reflectors according to embodiment of the present disclosure incorporating various curved mirrors and precise placement, significantly contributes to improved heat distribution, energy efficiency, and processing time for tubing applications. This design addresses several key aspects of heat transfer and distribution, resulting in a more effective and efficient shrinking process. The new reflector has specified curvature and placements of mirrors and lamp. It can distribute heat on all surfaces of tubing. Heat shrink quality is consistent with much less operator dependence. Energy saving provides sustainability. With the optimized reflector, heat can be distributed evenly on the tube. This saves the need for an operator to perform excessive manual turning the tube, if any turning is required at all. This uniform heat distribution will lead to optimal heat shrink quality.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

## Claims

1. A heating device (100) comprising:
a heat generating lamp (150);
a reflector assembly (200), including: an upper reflector (202); a lower reflector (204); a pair of side reflectors (206,208) arranged on either side of the upper and lower reflectors (202,204); and a lamp reflector (210);
a temperature sensor (180), for example an infrared temperature sensor; and
a control system (300) responsive to the output of the temperature sensor (180) for controlling at least one parameter of the heat generating lamp (150).

2. The device (100) of claim 1, wherein the device comprises a heat gun (100) having a housing (110) in which the reflector assembly (200) is arranged, wherein the housing optionally comprises recesses (114) formed on a pair of supports (112) of the housing for supporting a tubular shaped product (10) within the device (100).

3. The device (100) of claim 2, further comprising a fan (130) arranged within the housing (110) and operating via the control system (300).

4. The device (100) of claim 1, 2 or 3, wherein the reflector assembly (200) defines an opening (160) adapted to receive a tubular shaped product (10), wherein the opening optionally comprises cutouts or recesses (115) defined through each of the side reflectors (206,208).

5. The device (100) of any preceding claim, wherein the upper and lower reflectors (202,204) have a tapered width along their length.

6. The device (100) of any preceding claim, wherein the pair of side reflectors (206,208) are oriented obliquely to each other, with a distance between the side reflectors increasing along a direction away from the heat generating lamp (150).

7. The device (100) of any preceding claim, wherein the control system (300) includes an input device (310) and a display (320) for controlling at least:
a predetermined maximum operation temperature;
a maximum temperature rise gradient; and
heat generating lamp power.

8. The device (100) of claim 4 or any claim dependent thereon, wherein the control system (300) is adapted to instruct a user to rotate the tubular product (10) once a desired temperature is reached on at least a portion of the product.

9. The device (100) of any preceding claim, wherein the upper and lower reflectors (202,204) are curved and define convex sides opposing one another, and optionally wherein each side reflector (206,208) is planar or has a slotted opening (212) formed therethrough for accepting a plate of filtered glass (230).

10. An infrared heating device (100) for a tubular product (10), comprising:
a housing (110):
a heat generating lamp (150); and
a reflector assembly (200), including:
a curved upper reflector (202) having a convex side;
a curved lower reflector (204) having a convex side opposing the convex side of the curved upper reflector (202);
a pair of side reflectors (206,208) arranged on either side of the upper and lower reflectors (202,204); and
a lamp reflector (210),
wherein the infrared heating device (100) is optionally the device (100) of any preceding claim.

11. The device (100) of claim 10 wherein the lamp reflector (210) is curved and defines a concave side facing the opening (160).

12. The device (100) of claim 10 or 11, wherein the heat generating lamp (150) is arranged between the upper and lower reflectors (202,204).

13. The device (100) of claim 10, 11 or 12, wherein the heat generating lamp (150) is surrounded by the lamp reflector (210).

14. A method (600) of operating an infrared heating device (100) for a tubular product (10), comprising:
setting (602) a desired maximum temperature;
setting (602) a desired temperature rise gradient;
setting (602) a desired power supplied to a lamp (150) of the device (100);
measuring (604) a real time temperature of the tubular product (10) with a temperature sensor (180);
after the desired maximum temperature is achieved, lowering (606) the power supplied to the lamp (150);
prompting (606) a user to rotate the tubular product (10) within the device (100); and
repeating (608) the process until desired heating of the tubular product is achieved.

15. The method (600) of claim 14, further comprising the step of inserting the tubular product (10) into a reflector assembly (200) of the heating device (100), wherein the reflector assembly (200) optionally includes:
an upper reflector (202);
a lower reflector (204) facing the upper reflector (202);
a pair of side reflectors (206,208) arranged on either side of the upper and lower reflectors (202,204) and facing one another; and
a lamp reflector (210), wherein the heating device (100) is optionally the heating device of any one of claims 10 to 13.
